# EUROPÄISCHE PATENTANMELDUNG

(11) **EP 0 579 239 A1**
(43) Veröffentlichungstag der Anmeldung: **19.01.1994**
(21) Anmeldenummer: 93111412.8
(22) Anmeldetag: 15.07.1993
(51) Int. Cl.: E03F 7/10, B01D 25/12

(54) **Verfahren zur Aufbereitung und Reinigung von Inhalten aus Schwerkraftabscheidern, insbesondere Schlamm-/Sandfängen und/oder Benzinabscheider**

(30) Priorität: 16.07.1992 DE 4223368; 16.07.1992 DE 9209535 U
(71) Anmelder: Walter Reinger Recycling und Entsorgung, 79793 Wutöschingen-Horheim (DE)
(72) Erfinder: Reinger, Marco, D-79809 Weilheim-Nöggenschwiel (DE); Reinger, Karlheinz, D-79761 Waldshut-Tiengen (DE)
(74) Vertreter: Gleiss & Grosse

(57) **Zusammenfassung**

Die Erfindung betrifft ein Verfahren zur Aufbereitung und Reinigung von Inhalten aus Schwerkraftabscheidern, insbesondere Schlamm-/Sandfängen und/oder Benzinabscheider, bei welchem die Inhalte der Abscheider über räumlich getrennte und eine Einheit einer mobilen Anlage bildenden Vorrichtung (1) behandelt werden, wobei die in den Abscheidern unter Ausnutzung der Dichtedifferenz bereits separierten Phasen (Öl/Benzin/Wasser/Sand-Schlamm) getrennt abgesaugt und separat in den Anlagen erfaßt werden, das Öl/Benzin vom mitgerissenem Wasser befreit und der Wiederverwertung zugeführt, das Wasser gereinigt und das Prozesswasser zur Wiederbefüllung des Abscheiders und/oder zur Einleitung in das Kanalnetz verwendet, die Sand/Schlammfraktion abgesaugt, in eine Suspension gebracht und einer Aufbereitung unterzogen wird.

## Beschreibung

Die Erfindung betrifft ein Verfahren zur Aufbereitung und Reinigung von Inhalten aus Schwerkraftabscheidern, insbesondere Schlamm/Sandfängen und/oder Benzinabscheider, bei welchem die Inhalte der Abscheider über räumlich getrennte und eine Einheit einer mobilen Anlage bildende Vorrichtung behandelt werden, wobei die in den Abscheidern unter Ausnutzung der Dichtedifferenz bereits separierten Phasen (Öl/Benzin/Wasser/Sand-Schlamm) getrennt abgesaugt und separat in der Anlage erfaßt werden. Das Öl/Benzin wird vom mitgerissenen Wasser befreit und der Wiederverwertung zugeführt. Das Wasser wird gereinigt und das Prozesswasser zur Wiederbefüllung des Abscheiders und/oder zur Einleitung in das Kanalnetz verwendet. Die Sand/Schlammfraktion wird abgesaugt in eine Suspension gebracht und einer Aufbereitung unterzogen.

Öl-/Benzin-Abscheider und/oder Sand-/Schlammfänge-Abscheider kommen in Tankstellen, Kfz-Betrieben und dergleichen vor.
Die Entsorgung der oben genannten Anlagen geschieht im allgemeinen durch Absaugen der Abscheiderinhalte durch Tankwagen und Weitertransport zu speziellen Abwasseraufbereitungsanlagen. Je nach Standort sind dabei mehr oder weniger große Entfernungen zu überbrücken, was zum Teil erhebliche Transportkosten mit sich bringt. Diese Art der Entsorgung ist sehr kostenaufwendig. Sie hat ferner den Nachteil, daß die Trennung der Stoffe, die durch die Kombination Sand-/Schlammfang- und Öl-Ascheider zunächst bewirkt, wieder aufgehoben wird. Das Material wird durchmischt und der Sand wird mit Ölschlamm und freiem Öl kontaminiert.

Aus der DE-OS 33 33 777 ist ein stationär zu installierende, hochwirksamer Fettabscheider bekannt, der eine im wesentlichen vertikale Strömung des Abwassers anwendet. Hierzu wird das Abwasser mehrfach um etwa 180° umgelenkt. Dieser Fettabscheider ermöglicht eine besonders schnelle und wirksame Trennung von Feststoffen, wäßriger und nichtwäßriger aufschwimmender Phase. Aus wirtschaftlichen Gründen kann jedoch nicht jeder Betrieb einen solchen Abscheider anschaffen.

Für die Entsorgung von Schlammwasser aus Abwassergruben ist aus dem DE-Patent 38 42 623 bereits eine verfahrbare Vorrichtung bekannt, mittels welcher das Schlammwasser abgesaugt und dann mit einem Flockungsmittel versetzt wird. Bei der Fahrt zur nächsten Abwassergrube erfolgt dann eine Abtrennung der füllbaren Feststoffe vom Wasser. Bei der folgenden Abwassergrube wird dann nach Absaugen deren Inhaltes das zuvor gereinigte Wasser in die entleerte Abwassergrube zurückgeleitet. Die ausgefällten Feststoffe werden im Fahrzeug gesammelt und nach Abfahren einer Sammeltour getrennt entsorgt.

Aufgabe der Erfindung ist es, ein Verfahren zum Entsorgen und Reinigen von Schwerkraftabscheidern, insbesondere Schlamm-/Sandfängen und Öl-/Benzin-Abscheidern sowie eine Vorrichtung zur Durchführung des Verfahrens bereitzustellen, die es gestatten, eine hochwirksame Abtrennung und Rückgewinnung nichtwäßriger Abfälle aus Abwässern oder Prozeßabwässern wirtschaftlich durchzuführen, bei gleichzeitiger Einhaltung behördlicher Sicherheitsauflagen in bezug auf die Einleitung gereinigter Abwässer in die Kanalisation.

Die Lösung dieser Aufgabe erfolgt erfindungsgemäß durch ein Verfahren mit den Merkmalen des Anspruchs 1, wobei das Verfahren mittels einer Vorrichtung gekennzeichnet durch die Merkmale des Anspruchs 2 durchgeführt wird. Vorteilhafte Ausgestaltungen der erfindungsgemäßen Vorrichtung sind in den Unteransprüchen definiert.

Anhand den beigefügten Zeichnungen, die besonders bevozugte Ausführungen der Erfindung zeigen, wird diese nun näher beschrieben.

Dabei zeigen:

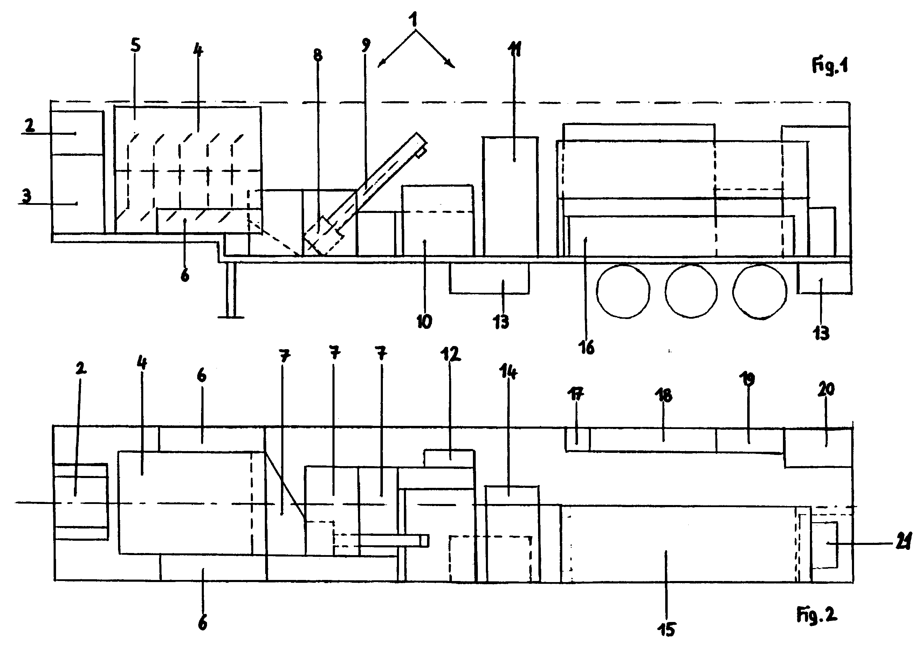

- Figur 1: eine Seitenansicht der Erfindung in schematischer Darstellung;
- Figur 2: eine Draufsicht der Erfindung in schematischer Darstellung.

Der mitgerissene Wasseranteil wird nach der Separierung vom Öl getrennt abgezogen und in den Prozeßkreislauf zurückgeführt. Das Öl wird in entsprechende Behälter abgelassen und der Aufbereitung zugeführt. Beide Vorgänge erfolgen nach Abschluß der örtlichen Reinigungsarbeiten auf dem Fahrzeug selbst oder an zentraler Stelle.

Der Inhalt der Sandfänge wird in die Reaktionstrommel mittels Vakuum und gegebenenfalls Wasser aus dem Abscheider oder der an Bord befindlichen Wassertanks 6/20, welche mit gereinigtem Prozeßwasser gespeist werden, suspendiert.
Durch die eingebauten Mischflügel 5 wird das Material aufgeschlossen. Aus der Chemikalienstation 12 können der Trommel 4 oder dem Suspensionstank 7 Chemikalien zur Wasseraufbereitung zugeführt werden, um zu gewährleisten, daß das Wasser eine Qualität erreicht, die ein Ablassen zur Wiederbefüllung des Abscheiders oder zur Einleitung in das Kanalnetz möglich macht. Das suspendierte Material wird über einen rotierenden Feinstrechen 8 in die Suspensionstanks 7, hier ein Rührwerksbehälter, überführt. Dabei werden grobe Bestandteile entfernt und über eine Entwässerungsschnecke 9 in das Sammelbehältnis 10 transportiert. Das gesammelte Material wird an einer zentralen Stelle entladen und kann zur Wiederverwertung (Bauwirtschaft) oder auf eine Hausmülldeponie abgelagert werden.

Die von Grobanteilen befreite Suspension wird über die Kolbenverdrängungspumpe, hier eine Kolbenmembranpumpe, der Kammerfilterpresse aufgegeben, die über dem Schlammbehälter angeordnet ist. Die abgepreßten Feststoffe werden dort gesammelt und über eine Schnecke in Deckelmulden umgeladen. Auch dieser Vorgang erfolgt nach Abschluß der lokalen Reinigungsarbeiten an zentraler Stelle. Das Material ist zur Ablagerung auf Hausmüll/Bauschuttdeponien geeignet.

Das Filtrat wird in die Wassertanks 20/6 zurückgeführt und kann zum Aufrühren der Feststoffe im Sandfang oder zur Waschung eingesetzt werden. Während oder nach den Reinigungsarbeiten wird an zentraler Stelle die Wasserqualität geprüft. Entweder erfolgt dann direkte Einleitung zur Herstellung der Betriebsbereitschaft des Abscheiders, oder zuvor, unter Verwendung der Chemikalienstation 12, des Rührbehälters 7 und der Kammerfilterpresse 15, eine chemisch-physikalische Wasserbehandlung mit nachfolgender analytischer Kontrolle und Einleitung in den Abscheider.

Gegenüber dem Stand der Technik, bei dem die Mischung der anfallenden Komponenten zu einer Zusammensetzung führt, die ca. 3 bis 5 % freies Öl, ca. 15 bis 25 % Sand und Schlamm und ca. 75 % Wasser aufweist, die zur Aufbereitung anfallen, werden die anfallenden Komponenten erfindungsgemäß getrennt aufbereitet.

Erfindungsgemäß wurde beispielsweise die Ölphase mehrerer Tankstellen abgesaugt und im Ölsammelbehälter durch Dichtedifferenz separiert. In der im Abscheider verbleibenden Wasserphase wurden folgende Kohlenwasserstoffgehalte analytisch ermittelt:

| | |
|---|---|
| T1 | 125 mg KW/l |
| T2 | 25 mg KW/l |
| T3 | 354 mg KW/l |
| T4 | 270 mg KW/l |

Die Wasserphase wurde aus den Abscheidern entnommen und auf dem Fahrzeug vor Ort einer chemisch-physikalischen Behandlung unterzogen (1. Alkalisierung mit Kalkmilch; 2. Filtration über die Kammerfilterpresse; 3. Neutralisation mit Schwefelsäure). In den Proben nach Behandlung wurden folgende Kohlenwasserstoff-Werte ermittelt:

| | |
|---|---|
| T1 | 1.8 mg KW/l |
| T2 | 4.5 mg KW/l |
| T3 | 5.1 mg KW/l |
| T4 | 1,5 mg KW/l |

Die Einleitbedingungen für Abwässer in die Kanalisation ist mit einem Kohlenwasserstoffgehalt von <20mg/l limitiert. Damit ist nach Behandlung vor Ort das Wasser in die Kanalisation ableitbar.

Der Sandfang von Tankstellen wurde beispielsweise erfindungsgemäß entleert und aufbereitet. Über die Chemikalienstation wurden der abgesaugte Suspension im Wäscher Flockungsmittel, Betonit und Aktivkohle zugesetzt. Anschließend wurde die Suspension über die Kammerfilterpresse entwässert. Hierbei wurden folgende Werte ermittelt:

| | |
|---|---|
| Schlammsuspension aus Sandfang: | 16,8 mg KW/l |
| abgepreßter Schlamm | 89,0 mg KW/l |
| Filtrat | 4,0 mg KW/l. |

Damit ist sowohl die Einleitung des Filtrates in die Kanalisation (Grenzwert 20 mg KW/l) als auch das Verbringen der Feststoffe auf eine entsprechende Deponie (A-Wert Holland-Liste 100 mg/kg) gegeben.

### Bezugszeichenliste

- 1: Vorrichtung
- 2: Vakuumpumpe
- 3: Stromaggregat
- 4: Reaktionstrommel (evakuierbar)
- 5: Flügel von 4
- 6: Wassertanks für Prozesswasser
- 7: Suspensionstank (Sammelbehälter)
- 8: Feinrechen
- 9: Entwässerungsschnecke
- 10: Sandauffangmulde
- 11: Verdrängungspumpe
- 12: Chemikalienstation
- 13: Reaktionsbehälter zur Behandlung der Prozesswässer
- 14: elektrische Steuerung
- 15: Filterpresse
- 16: Schlammwanne
- 17: Ölsauger
- 18: evakuierbarer Ölsammelbehälter
- 19: Pufferbehälter für Prozesswasser
- 20: Hochdruckreiniger

## Patentansprüche

1. Verfahren zur Aufbereitung und Reinigung von Inhalten aus Schwerkraftabscheidern, insbesondere Schlamm-/Sandfängen und/oder Benzinabscheider, bei welchem die Inhalte der Abscheider über räumlich getrennte und eine Einheit einer mobilen Anlage bildenden Vorrichtung behandelt werden, wobei die in den Abscheidern unter Ausnutzung der Dichtedifferenz bereits separierten Phasen (Öl/Benzin/Wasser/Sand-Schlamm) getrennt abgesaugt und separat in den Anlagen erfaßt werden, das Öl/Benzin vom mitgerissenem Wasser befreit und der Wiederverwertung zugeführt, das Wasser gereinigt und das Prozesswasser zur Wiederbefüllung des Abscheiders und/oder zur Einleitung in das Kanalnetz verwendet, die Sand/Schlammfraktion abgesaugt, in eine Suspension gebracht und einer Aufbereitung unterzogen wird,
gekennzeichnet in einer Verfahrensstufe durch folgende Schritte:
a) Zuführung der aus dem Abscheider abgesaugten Öl/Benzinphase in einem Unterdruckbehälter,
b) Abtrennen der mitgerissenen Wasserpartikel von der Öl/Benzinphase,
c) Reinigung der wäßrigen Phase und Rückführung in den Prozeßkreislauf oder Verwertung zur Wiederherstellung der Betriebsbereitschaft des Abscheiders oder Ableiten derselben in das Kanalnetz, und in einer anderen Verfahrensstufe durch folgende Schritte:
d) Zugabe von Prozeßwasser in den Sand/Schlammfang,
e) Zugabe von Prozeßwasser für die Reinigung des Sand/Schlammfanges auf der mobilen Anlage,
f) Ansaugen der Suspension in eine Reaktionstrommel,
g) Behandeln der Suspension ohne/mit chemischen Hilfsstoffen,
h) mechanische Abtrennung der groben Feststoffanteile,
i) Abtrennen der feinen Feststoffanteile mittels Druckfiltration,
j) Kontinuierliche analytische Überwachung des Filtratwassers,
k) Rückführung des Filtratwassers in den Abscheider zur Wiederherstellung der Betriebsbereitschaft oder Einleitung in die Kanalisation,
l) Zuführung des gereinigten Sandes in die Wiederverwertung und/oder Deponie,
wobei die eine und die andere Verfahrensstufe gleichzeitig, getrennt, oder zeitlich abgestuft durchführbar ist.

2. Mobile Anlage zur Durchführung des Verfahrens nach Anspruch 1,
mit einem als Unterdruckbehälter ausgelegten Sammelbehälter (4), einem mit einer Hochdruckpumpe (21) aufweisenden Wassertank (20), einer Reaktionstrommel (4), mit rotierenden Flügeln (5) die mit einer unter Druck stehenden Ansaugleitung versehen ist, einem an dessen Abpumpausgang sitzenden, rotierenden Feinrechen (8), einem Rührwerksbehälter (7) und nachgeschalteter Kammerfilterpresse (15), einer analytischen Überwachungseinheit (19) und Pufferbehälter für das Prozesswasser (20/6).

3. Mobile Anlage nach Anspruch 2,
dadurch gekennzeichnet,
daß die Reaktionstrommel (4) an der Innenseite aufgebrachte Schlagleisten aufweist.

4. Mobile Anlage nach Anspruch 2 und 3,
dadurch gekennzeichnet,
daß dieser eine Abwasserprüfvorrichtung (19) zugeordnet ist, wie z.B. zur Überwachung der Kohlenwasserstoffkonzentration oder des pH-Wertes im Prozesswasser.
